# EUROPEAN PATENT APPLICATION

(11) **EP 1 348 363 A1**
(43) Date of publication of application: **01.10.2003**
(21) Application number: 02258132.6
(22) Date of filing: 26.11.2002
(51) Int. Cl.: A47J 27/212, A47J 31/44, G01F 23/02

(54) **Gauges for liquid containing appliances**

(30) Priority: 26.03.2002 CN 02108504
(71) Applicant: Kitime Industries Limited, Central, Hong Kong (CN)
(72) Inventor: Yeung, Ruey Ching, c/o Kitime Industries Limited, Central, Hong Kong (CN)
(74) Representative: Fry, Alan Valentine

(57) **Abstract**

A gauge for indicating the level of liquid present in a liquid containing appliance (1) comprises a transparent plastics cover (2) formed with a collar (23) dimensioned to locate within an opening (11) formed in one side of the appliance. The collar (23) carries a plurality of spaced clips (24) which stand proud of the surface of the collar. These clips (24) located behind the material which defines the rim of the opening (11) to lock the cover in place with a flexible seal (3) trapped between the opposed faces of the cover and the appliance.

## Description

This invention relates to gauges for indicating the level of water in appliances and to appliances including such gauges. The invention also relates to a method of securing a water level indicating gauge in an appliance.

The invention has particular application to water level indicating gauges for electric kettles, particularly stainless steel electric kettles. It does, however, also have application to other appliances such as juice extractors, coffee making machines, blenders and other similar appliances.

Providing a water gauge in an electric kettle is known. Such gauges generally comprise a relatively clear plastics cover which spans an opening formed in one side of the kettle through which the level of water can be viewed. These covers may include scales to assist the user in detecting the volume of water present in the kettle. Generally, these gauge covers have previously been secured in place by a hot welding, high frequency welding or ultrasonic welding technique. All of these welding techniques require the use of expensive equipment and significantly add to production costs. Also, defects which can occur during the welding process will inevitably lead to leakage of water through the joint between the gauge cover and the kettle. These defects are often only apparent when a kettle is in service.

One object of the present invention is to provide a kettle which is relatively easy to assemble without the need for expensive welding equipment and which has enhanced resistance to leakage.

In one aspect, the invention provides a gauge for indicating the level of liquid present in a liquid containing appliance, the gauge comprising a transparent plastics cover formed with a collar dimensioned to locate within an opening formed in one side of the appliance, the collar carrying a plurality of spaced clips which stand proud of the surface of the collar and locate behind the material which defines the rim of the opening to lock the cover in place with a flexible seal trapped between the opposed faces of the cover and the appliance.

The gauge cover may be graduated to display to the user the quantity of water present in the appliance.

The collar may be displaced inwardly from the edge of the cover to define a peripheral rim.

The cover may be oval shaped.

In another aspect, the invention provides a liquid containing appliance including a gauge for determining the level of water present in the appliance, the gauge comprising a transparent plastics cover formed with a collar which projects into and through an opening formed in one side of the appliance, the collar carrying a plurality of upstanding clips formed with steps which locate behind the edge of the appliance which defines the boundary of the opening and a flexible seal positioned between and compressed by opposed surfaces of the cover and the appliance boundary edge.

The material of the appliance which borders the opening may be turned inwardly to define a first annular surface, downwardly to define an annular abutment surface and inwardly to define a second annular surface, the steps of the clips locating behind the edges of the second annular surface.

The appliance may be made of metal, for example, stainless steel.

In a further aspect the invention concerns a method of producing an appliance as described in the preceding three paragraphs comprises the steps of positioning the washer around the periphery of the collar, inserting the collar into the opening and applying pressure to the cover to cause the clips to located behind the edge of the washer.

The invention will now be described, by way of example only, with reference to the accompanying diagrammatic drawings in which:-
Figure 1 is a side view partly in section of an electric kettle in accordance with the invention;
Figure 2 is a scrap view in section of a detail (shown as A in Figure 1) of the kettle illustrated in Figure 1;
Figure 3 is a side view of a water level gauge cover which forms part of the kettle shown in Figure 1;
Figure 4 is a rear view of the gauge cover shown in Figure 3;
Figure 5 is a front view of the gauge cover illustrated in Figures 3 and 4;
Figure 6 is a perspective view of a section taken through line 6-6 of Figure 5; and
Figure 7 is a scrap view similar to that shown in Figure 2 illustrating an alternative construction in accordance with the invention.

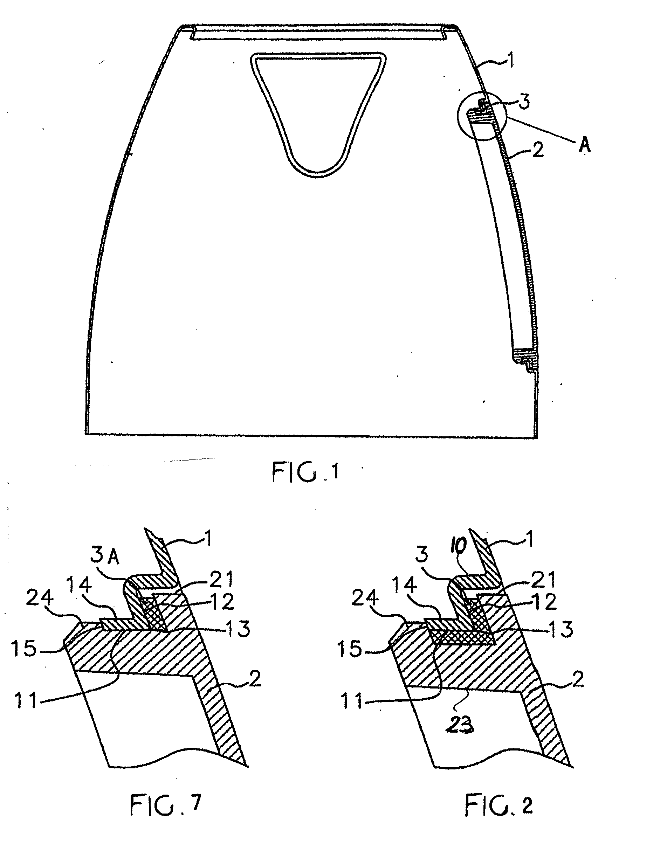

The kettle illustrated in Figures 1 to 6 comprises a water retaining body 1 to one side of which is secured a water level indicating gauge. The gauge comprises a transparent plastics cover 2 having scaled markings to assist the user in determining the actual level of water present in the kettle. A resilient washer 3 is located between opposed surfaces of the gauge cover 2 and the adjoining rim of the kettle body 1 to prevent leakage of water through the joint formed between the gauge cover and the kettle.

The plastics gauge cover 2 locates within an opening 11 of generally oval shape formed in one side of the kettle. Other shapes of opening such as round, rectangular or square can, of course, be provided. The height of the opening spans a substantial part of the height of the kettle. The rim of the kettle which defines the boundary of the opening 11 is shaped as illustrated in Figure 2 and includes an inwardly extending annulus 10, an annular abutment surface 12 and an inwardly projecting end surface 14. The end surface 14 extends inwardly from the junction 13 between the surfaces 12 and 14.

As will be seen from Figure 2, the washer 3 is retained between the opposed faces of the gauge cover 2 and the kettle material which defines the boundary of the opening 11.

As can be seen from the drawings, the gauge cover 2 is shaped to complement and fit closely within the opening 11 of the kettle. Thus, the size and shape of the outer rim 21 of the cover is dimensioned to define a relatively close fit within the opening 11 of the kettle. The cover is formed with a collar 23 which, on assembly, protrudes into and through the kettle opening 11. The collar 23 includes around its periphery a series of spaced clips 24 which, on assembly, locate behind the edge 15 of the surface 14 the kettle body to lock the cover firmly in place within the opening. Each clip 24 comprises a raised step which protrudes above the surface of the collar 23 and is formed with a lip which projects at an angle generally normal to the respective surface of the collar. The number of clips provided depends *inter alia* on the length of the perimeter of the opening. The clips may vary in size and the spacings between neighbouring clips may differ from those shown in the drawings. Other similarly shaped clips may be employed.

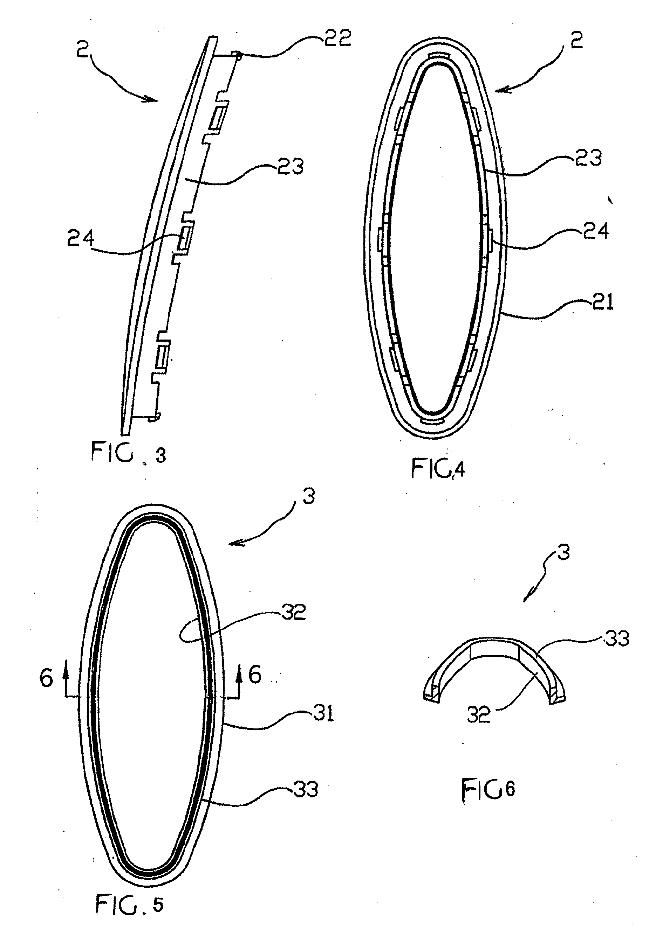

As will be seen from Figures 5 and 6, the washer 3 (which may be produced from a thin elastic heat-resistant material such as rubber, rubber substitutes, silicon plastic or the like) is of an ovoid shape which complements that of the outer circumference 21 of the gauge cover. In cross-section (see Figure 6) the washer is of generally "L" shape. Washers having different cross-sections can be employed, for example, washers of 'O' or square cross-section. As will be seen from Figure 2, on assembly, the outermost end of the washer locates between the opposed surfaces of the inner surface of the rim 21 and the abutment surface 12. The innermost end of the washer locates around the collar 23 with its edge in contact with the clips 24.

The alternative arrangement illustrated in Figure 7 includes a washer 3a which is essentially flat shaped and is pressed tightly between the opposed surfaces of the rim 21 and the abutment surface 12.

To assemble the water level gauge 2 to the kettle body, the washer 3 is located over the collar 23 of the gauge cover 2. The gauge cover is then inserted into the kettle opening 11 and pressure is applied to the cover to cause the collar 23 to flex to enable the clips 24 to pass over and locate securely behind the reinforced edge 15. On assembly, the washer 3 is compressed by the opposed surfaces of the kettle and the cover to provide a leak-proof seal to prevent water present in the kettle passing through the joint between the cover and the kettle.

It will be understood from the foregoing that the invention provides a relatively simple and low cost method of securing a water level indicating gauge into a viewing opening formed in one side a kettle or other appliance. Thus, assembly of the gauge to the kettle is achieved mechanically using relatively simple assembly jigs without the need for ancillary equipment.

It will also be understood that the gauge and the described method of assembly can be applied not only to electric kettles but also to a variety of different appliances including, for example, fruit juicers, blenders and the like.

It will be appreciated that the embodiments described above are merely exemplary of appliances in accordance with the invention and that various modifications can readily be made thereto without departing from the true scope of the invention as set out in the appended claims.

## Claims

1. A gauge for indicating the level of liquid present in a liquid containing appliance, the gauge comprising a transparent plastics cover formed with a collar dimensioned to locate within an opening formed in one side of the appliance, the collar carrying a plurality of spaced clips which stand proud of the surface of the collar and locate behind the material which defines the rim of the opening to lock the cover in place with a flexible seal trapped between the opposed faces of the cover and the appliance.

2. A gauge as claimed in claim 1 wherein the cover is graduated to display to the user the quantity of water present in the appliance.

3. A gauge as claimed in claim 1 or claim 2 wherein the collar is displaced inwardly from the edge of the cover to define a peripheral rim.

4. A gauge as claimed in claim 1 or claim 2 wherein the cover is oval shaped.

5. A liquid containing appliance including a gauge for determining the level of water present in the appliance, the gauge comprising a transparent plastics cover formed with a collar which projects into and through an opening formed in one side of the appliance, the collar carrying a plurality of upstanding clips formed with steps which locate behind the edge of the appliance which defines the boundary of the opening and a flexible seal positioned between and compressed by opposed surfaces of the cover and the appliance boundary edge.

6. A liquid containing appliance as claimed in claim 5 wherein the material of the appliance which borders the opening is turned inwardly to define a first annular surface, downwardly to define an annular abutment surface and inwardly to define a second annular surface, the steps of the clips locating behind the edges of the second annular surface.

7. A liquid containing appliance as claimed in claim 5 or claim 6 made of metal.

8. A liquid containing appliance a claimed in claim 5 or claim 6 made of stainless steel.

9. A liquid containing appliance as claimed in any one of claims 5 to 8 in which the appliance is a kettle.

10. A liquid containing appliance as claimed in any one of claims 5 to 8 in which the appliance is an electric kettle.

11. A method of producing an appliance as claimed in any one of claims 5 to 10 comprising the steps of positioning the washer around the periphery of the collar, inserting the collar into the opening, and applying pressure to the cover to cause the clips to locate behind the edge of the washer.
